# EUROPÄISCHE PATENTSCHRIFT

(11) **EP 2 150 373 B1**
(45) Veröffentlichungstag und Bekanntmachung des Hinweises auf die Patenterteilung: **29.08.2012**
(21) Anmeldenummer: 08758661.6
(22) Anmeldetag: 21.05.2008
(51) Int. Cl.: B23K 37/047, B62D 65/02

(54) **BEARBEITUNGS-, INSBESONDERE GEOMETRIESCHWEISSSTATION MIT BEWEGBAREN SPANNRAHMEN, JE MIT QUERSTREBEN**
MACHINING STATION, IN PARTICULAR GEOMETRICAL WELDING STATION, WITH MOVEABLE CLAMPING FRAMES, EACH HAVING TRANSVERSE STRUTS
POSTE D'USINAGE, EN PARTICULIER DE SOUDAGE GÉOMÉTRIQUE PRÉSENTANT DES ARMATURES DE SERRAGE MOBILES DOTÉES D'ENTRETOISES RESPECTIVES

(30) Priorität: 25.05.2007 DE 102007024589
(43) Veröffentlichungstag der Anmeldung: 10.02.2010
(73) Patentinhaber: KUKA Systems GmbH, 86165 Augsburg (DE); Bayerische Motoren Werke Aktiengesellschaft, 80809 München (DE)
(72) Erfinder: HOESL, Anton, 93152 Nittendord (DE); NÄB, Robert, 85356 Freising (DE); FUSS, Peter, 85244 Sigmertshausen (DE); KERBER, Stefan, 86504 Ried (DE); ROTHENFUSSER, Marcus, 56316 Friedberg/Harthausen (DE); NIEDERMEIER, Ludwig, 81549 München (DE); LESERER, Peter, 93173 Wenzenbach (DE); RENNER, Falk, 04316 Leipzig (DE)
(74) Vertreter: Ernicke, Klaus Stefan
(86) Internationale Anmeldenummer: PCT/EP2008/004054
(87) Internationale Veröffentlichungsnummer: WO 2008/145286

(56) Entgegenhaltungen:
- US-A- 6 008 471
- US-A1- 2003 037 432
- US-A1- 2003 071 111
- US-A1- 2005 103 821
- US-E- R E36 541

## Beschreibung

Die Erfindung bezieht sich auf eine Bearbeitungs- und insbesondere eine Geometrieschweißstation für Kraftfahrzeug-Rohkarosserien gemäß dem Oberbegriff des Anspruchs 1.

Eine solche Geometrieschweißstation für Kraftfahrzeug-Rohkarosserien ist aus der US-2005/0103821 A1 bekannt. Sie dient zur Prototypenproduktion und weist beidseitig des Karosserie-Fördersystems angeordnete Spannrahmen auf, die zum Positionieren von Karosserie-Seitenteilen quer zur Förderrichtung des Fördersystems aus einer Bereitschafts- in eine bezüglich der Rohkarosserie exakt fixierte Arbeitsstellung bewegbar sind. Die Spannrahmen sind fachwerkartig ausgesteift und sind mittels Schlitten im unteren Randbereich auf quer zur Förderrichtung des Fördersystems verlaufenden Führungen linear verfahrbar gelagert, die in der Arbeitsstellung verriegelt werden können. Die Spannrahmen können miteinander über mehrere Querstreben zu einem steifen Spannkäfig verbunden werde, wobei die Querstreben auf der Rahmenoberseite aufgelegt und mittels Schnellverschlüssen fixiert werden. Für einen Karosseriewechsel müssen die Querstreben abgenommen und nach Einfahren neuer Karosseriekomponenten in die Station wieder aufgelegt und fixiert werden.

Die US-Re. 36,541 offenbart eine ähnliche Geometrieschweißstation, bei der die seitlichen Spannrahmen in Arbeitsstellung vorn und hinten durch einen starren, einteiligen Querbalken verbunden werden, der sich über die Fahrzeugbreite erstreckt und von einem Roboter mittels vertikaler Zapfen in die Spannrahmen gesteckt wird. Bei jedem Karosseriewechsel muss der Querbalken von dem Roboter entfernt und anschließend wieder montiert werden.

Die US 6,008,471 A offenbart eine andere Geometrieschweißstation mit seitlichen, quer verfahrbaren Spannrahmen, die über Schnellkupplungen direkt miteinander gekuppelt werden können. Hierbei haben die Spannrahmen eine spezielle abgewinkelte Bogenform mit horizontalen Längsbalken und vertikalen Stützbalken, mit der sie in der Arbeitsstellung die Rohkarosserie an deren Oberseite und an deren Heckbereich übergreifen. In der Arbeitsstellung befinden sich die oberen Längsbalken und die hinteren Stützbalken der Spannrahmen etwa in Karosseriemitte. Sie sind dabei eng benachbart und werden durch die Schnellkupplungen direkt miteinander verbunden. Die in Karosseriemitte befindlichen Längs- und Stützbalken tragen rippenartig nach außen ragende Spannelemente, welche die Karosserieseitenteile von der Innenseite her greifen, so dass die Seitenwände von außen her für die Schweißroboter frei zugänglich sind.

Die US 2003/0037432 A1 und die US 2003/071111 A1 befassen sich mit seitlichen Spannrahmen, die Querstreben aufweisen und miteinander über Kupplungsteile starr gekuppelt werden können. Diese Kupplung dient allerdings nur Transportzwecken und einem vereinfachten Transport der gekuppelten und dadurch lagestabilisierten Spannrahmen. Das Kuppeln der Spannrahmen wird außerdem durch kreuzweise angebrachte Verriegelungsstangen unterstützt und gesichert. In der Arbeitsposition sind jedoch die Spannrahmen voneinander getrennt und seitlich distanziert, wobei die Kupplungen gelöst sind.

Bei anderen Geometrieschweißstationen an Fertigungsstrassen für Kraftfahrzeugkarosserien gemäß der EP 760 770 B1 und EP 968073 B1 werden die Karosserieteile durch seitlich zugestellte Spannrahmen gegenseitig exakt positioniert und dann mit Hilfe von Schweißrobotern miteinander verschweißt. Dabei erfolgt die Zustellbewegung der Spannrahmen durch stationär aufgeständerte oder an einem Vierachsportal aufgehängte Transportroboter. Die lagefeste Verriegelung der Spannrahmen in der Arbeitsstellung wird durch Querstreben bewirkt, welche die Spannrahmen für die Dauer des Schweißprozesses miteinander verbinden. Dabei wird von dem Transport- und Positioniersystem der Spannrahmen wertvoller Einbauraum belegt, der für weitere Bearbeitungsgeräte, also vor allem für Schweißroboter in einer aus Gründen kurzer Taktzeiten erforderlichen Anzahl dann nicht mehr zur Verfügung steht. Ferner ist es bei derartigen Bearbeitungsstationen bekannt, die Spannrahmen auf Führungsschienen in die Arbeitsstellung zu verfahren und dort an bodenfesten Standsäulen zu verriegeln. In diesem Fall sind der Roboter-Arbeitsbereich und damit auch die Schweißpunktzugänglichkeit deutlich eingeschränkt.

Aufgabe der Erfindung ist es, eine Bearbeitungsstation der eingangs genannten Art so auszubilden, dass einerseits der Einbauraum für die Bearbeitungswerkzeuge ohne Beeinträchtigung einer lagegenauen Fixierung der Spannrahmen in der Arbeitsstellung deutlich vergrößert und andrerseits die Zugänglichkeit zu den Rohkarosserieteilen an der Bearbeitungsstation verbessert wird.

Diese Aufgabe wird erfindungsgemäß durch die im Patentanspruch 1 gekennzeichnete Bearbeitungsstation gelöst.

Erfindungsgemäß wird aufgrund der schienengeführten Zustellbewegung in Verbindung mit der dadurch gleichzeitig eingekoppelten, gegenseitigen Querverstrebung der Spannrahmen auf äußerst platzsparende Weise eine lagegenaue Spannrahmenverriegelung unter Verzicht auf aufwändige Positioniersysteme in Form von Transportrobotern, Manipulatoren, Hebezeugen oder sonstigen Positioniereinrichtungen, wie etwa Verriegelungssäulen, erzielt und der freie Zugang zu den zu bearbeitenden Karosserieteilen derart vergrößert, dass die entsprechenden Bearbeitungswerkzeuge, also vorzugsweise programmgesteuerte Schweißroboter, problemlos in einer für kurze Taktzeiten erforderlichen Anzahl an der Bearbeitungsstation platziert werden können.

Aus Gründen einer erhöhten Schubsteifigkeit des aus Spannrahmen und Querstreben bestehenden Rahmenverbunds sind die Spannrahmen zweckmässigerweise über in Höhenrichtung der Spannrahmen versetzte Querstreben miteinander verbunden, und aus dem gleichen Grund sind zumindest einige der Querstreben vorzugsweise gegenseitig versteift. In weiterer, ebenfalls steifigkeitsmässig vorteilhafter Ausgestaltung der Erfindung ist der Rahmenverbund statisch überbestimmt.

Um die Zustellwege der mit den Querstreben versehenen Spannrahmen zwischen der Bereitschafts- und der Arbeitsstellung möglichst klein zu halten, empfiehlt es sich, die Querstreben jeweils zweiteilig auszubilden, wobei jede Teilstrebe einerseits starr mit dem Spannrahmen verbunden und andrerseits am freien Ende mit einem Kupplungsteil bestückt ist.

Zweckmäßigerweise sind die Spannrahmen und Querstreben in der Arbeitsstellung unter Vorspannung zusammengefügt, um ein mögliches Bewegungsspiel im Kupplungsbereich der Querstreben zu eliminieren, und aus Gründen einer besonders exakten und leichtgängigen Zustellbewegung sind die Spannrahmen vorzugsweise über spielarme Rollenkäfige auf den Führungen verfahrbar gelagert.

Im Hinblick auf ein besonders sicheres Einrücken und lastfestes Verkoppeln der Kupplungsteile können diese jeweils mit einem Zentrierkonus versehen und in der Arbeitsstellung der Spannrahmen mechanisch verriegelt sein, und aus dem gleichen Grund sind die bodenseitigen Fixpunkte vorzugsweise als Aufnahmen mit Spannrahmen-Zentrier- und Verriegelungsfunktion ausgebildet.

Gemäß einem weiteren wesentlichen Aspekt der Erfindung können auf jeder Seite der Bearbeitungsstation jeweils mehrere, unterschiedlich gestaltete Spannrahmen parallel zur Förderrichtung des Karosserie-Fördersystems gemeinsam und wechselweise von einer Vorrats- in die Bereitschaftsstellung verfahrbar sein. Hierdurch lassen sich auf fördertechnisch sehr einfache Weise eine Vielzahl typenspezifischer Spannrahmen bevorraten und selektiv zum Einsatz bringen, wie dies für eine im hohem Maße variable Bearbeitungsstation mit an unterschiedliche Karosserietypen jeweils individuell angepassten Spannrahmen erforderlich ist.

Die Erfindung wird nunmehr anhand eines Ausführungsbeispiels in Verbindung mit den Zeichnungen näher erläutert. Es zeigen in stark schematisierter Darstellung:
- **Fig. 1**: ein perspektivische Darstellung einer Bearbeitungsstation nach der Erfindung;
- **Fig. 2a, b**: die Ansicht der in Fig. 1 gezeigten Bearbeitungsstation in der Bereitschafts- (a) und in der Arbeitsstellung (b) der Spannrahmen;
- **Fig. 3**: eine Teilansicht einer Querstrebe im Bereich der Kupplungsteile; und
- **Fig. 4**: eine ausschnittsweise Darstellung einer Fertigungsstraße im Bereich der Bearbeitungsstation in der Aufsicht.

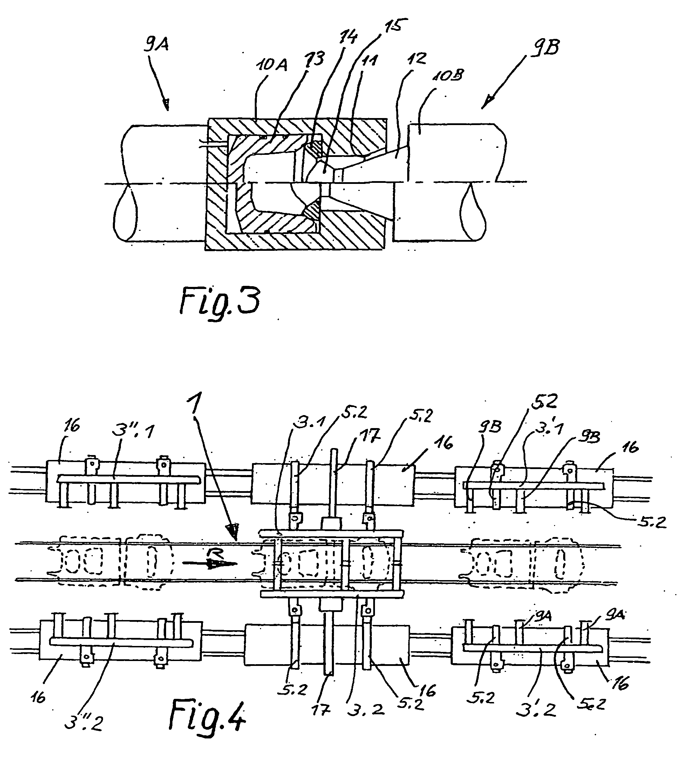

In den Fign. ist eine Bearbeitungsstation in Form einer Geometrieschweißstation dargestellt, die im Zuge einer Fertigungsstraße angeordnet ist und dazu dient, die durch ein Fördersystem 1 (Fig. 4) zu- und abgeführten, in den Fign. strichpunktiert gezeigten Karosserieteile, nämlich insbesondere die Bodengruppe und die Karosserie-Seitenteile lagegenau zueinander zu fixieren und dann mit Hilfe von - der Deutlichkeit halber nicht dargestellten - Schweißrobotern miteinander zu verschweißen.

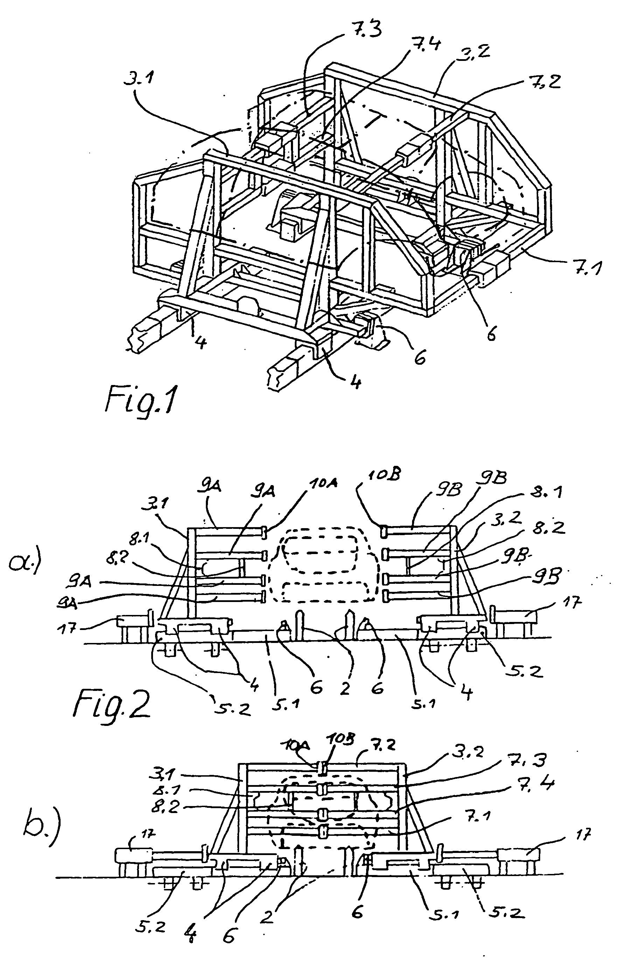

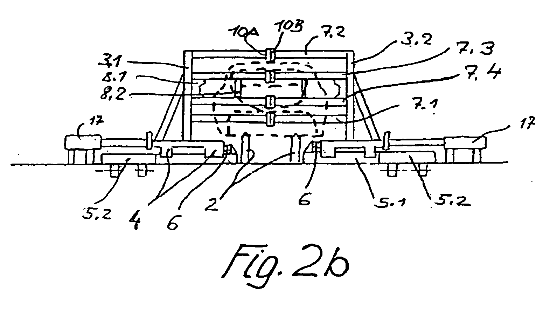

Zum Fixieren der Karosserieteile an der Bearbeitungsstation enthält diese ein übliches Bodenspannsystem 2 (Fig. 2) für die Karosserie-Bodengruppe und beidseitig der Bearbeitungsstation je einen Seitenteil-Spannrahmen 3, welcher quer zur Förderrichtung R des Fördersystems über Rollenkäfige 4 spiel- und reibungsarm auf Führungsschienen 5.1, 5.2 zwischen einer Bereitschaftsstellung (Fig. 2a) und einer das Karosserie-Seitenteil lagegenau an der Bodengruppe positionierenden Arbeitsstellung (Fig. 1 und 2b) verfahrbar gelagert ist.

Die Spannrahmen 3 sind jeweils fachwerkartig ausgesteift und werden in der Arbeitsstellung an stationären Fixpunkten 6, die als Aufnahmen mit Zentrierfunktion ausgebildet sind, verriegelt und gegenseitig über Querstreben 7 zu einem schubsteifen Rahmenverbund zusammengefügt.

Aus Schubsteifigkeitsgründen sind in Längs- und Höhenrichtung der Spannrahmen 3 jeweils mehrere Querstreben 7.1...7.4 angeordnet und zusätzlich Schubversteifungsteile 8.1 und 8.2 zwischen zueinander höhenversetzten Querstreben 7.3 und 7.4 eingesetzt. Eine oder mehrere Querstreben 7 können sich auch innerhalb des Karosserieumrisses durch Aussparungen oder Durchbrüche in den Karosserieteilen erstrecken, um eine möglichst gleichmäßige, gegenseitige Spannrahmenaussteifung zu erzielen. Auf diese Weise entsteht ein hochsteifer, statisch überbestimmter Rahmenverbund.

Jede Querstrebe 7 ist etwa mittig in zwei Teilstücke 9A und 9B unterteilt, die jeweils am einen Ende fest mit dem zugeordneten Spannrahmen 3.1 bzw. 3.2 verbunden und am freien Ende mit einem Kupplungsteil 10A bzw. 10B bestückt sind.

Wie aus Fig. 3 im einzelnen zu ersehen ist, enthält das Kupplungsteil 10A eine konische Aufnahmebohrung 11, in die ein ebenfalls konischer Zentrierbolzen 12 des Kupplungsteils 10B einführbar ist. In der eingerückten Kupplungslage (untere Hälfte der Fig. 3) werden die Kupplungsteile 10A, 10B durch einen z. B. pneumatisch betätigten Arbeitskolben 13 auf dem Wege über keilförmige Zwischenstücke 14, welche einen erweiterten Wulst 15 des Zentrierbolzens 12 hintergreifen, mechanisch verriegelt und dadurch die Strebenteilstücke 9A und 9B starr miteinander verbunden. Der aus den Spannrahmen 3 und Querstreben 7 bestehende Rahmenverbund wird somit selbsttätig beim Zusammenschieben der Spannrahmen 3 zusammengefügt, ohne dass es hierzu besonderer Transportroboter oder sonstiger Hebezeuge für die einzelnen Bestandteile des Rahmenverbunds, also die Spannrahmen 3 und/oder Querstreben 7, bedarf.

Um die Rahmenteile 3, 7 unter Vorspannung zu setzen, etwa um dadurch ein eventuelles Kupplungsspiel im verkuppelten Zustand des Rahmenverbunds auszugleichen, besteht die Möglichkeit, unter Beibehalt eines statisch bestimmten oder vorzugsweise sogar überbestimmten Rahmenverbunds eine zusätzliche Einzelstrebe 7 einzufügen, deren Gesamtlänge geringfügig von der Gesamtlänge der übrigen Querstreben 7 abweicht, so dass die etwas längeren Querstreben 7 beim Verriegeln der Kupplungsteile 10a, 10B unter Druck- und die geringfügig kürzere(n) Querstrebe(n) 7 unter Zugspannung gesetzt werden.

Ein weiterer wesentlicher Aspekt der beschriebenen Geometrieschweißstation, der sich auf die Bearbeitung unterschiedlicher Karosserietypen bezieht, wird anhand der Fig. 4 näher erläutert. Demgemäß sind auf jeder Seite der Bearbeitungsstation zusätzlich zu dem Spannrahmenpaar 3.1, 3.2 mehrere, individuell an weitere Karosserietypen angepasste Spannrahmenpaare 3'.1, 3'.2 und 3".1, 3".2 auf parallel zum Fördersystem 1 verfahrbaren Transportschlitten 16 angeordnet. Die Transportschlitten 16 sind mit formgleich zu den stationären Schienenstücken 5.1 ausgebildeten Tragschienen 5.2 für die Spannrahmen 3 bestückt.

Nach Beendigung des Schweißprozesses werden die Kupplungsteile 10 gelöst und die Spannrahmen 3 mit Hilfe von Aktuatoren 17 aus der Arbeitsstellung auf den Schienenstücken 5.1 in die Bereitschaftsstellung auf den zu den Schienenstücken 5.1 fluchtend ausgerichteten Tragschienen 5.2 des an der Bearbeitungsstation befindlichen Transportschlittens 16 zurückgezogen und dadurch der Rahmenverbund soweit geöffnet, dass die nachfolgenden Karosserieteile in die Bearbeitungsstation eingefahren werden können, woraufhin die Spannrahmen 3 erneut zugestellt und in der Arbeitsstellung verriegelt werden. Bei einem Wechsel des Karosserietyps hingegen werden die Spannrahmen 3 aus der Bereitschaftsstellung nicht erneut in die Arbeitsstellung zugestellt, sondern verbleiben auf dem Transportschlitten 16, und durch Verschieben des Schlittenverbands wird das für den neuen Karosserietyp benötigte Spannrahmenpaar 3 aus der bisherigen Vorrats- in die Bereitschaftsstellung an der Bearbeitungsstation befördert und kann nunmehr mittels der Aktuatoren 17 in die Arbeitsstellung verfahren und dann verriegelt werden. Somit lässt sich die Bearbeitungsstation rasch und auf fördertechnisch einfache Weise auf unterschiedliche Karosserietypen umrüsten.

## Patentansprüche

1. Bearbeitungs-, insbesondere Geometrieschweißstation für Kraftfahrzeug-Rohkarosserien, mit beidseitig des Karosserie-Fördersystems (1) angeordneten Spannrahmen (3), die zum Positionieren von Karosserie-Seitenteilen quer zur Förderrichtung (R) des Fördersystems (1) aus einer Bereitschafts- in eine bezüglich der Rohkarosserie exakt fixierte Arbeitsstellung bewegbar sind, wobei die fachwerkartig ausgesteiften Spannrahmen (3) im unteren Randbereich auf quer zur Förderrichtung (R) des Fördersystems (1) verlaufenden Führungen (5) linear verfahrbar gelagert und in der Arbeitsstellung an bodenseitigen, stationären Fixpunkten (6) positioniert sind und miteinander über mehrere Querstreben (7) verbindbar sind, **dadurch gekennzeichnet, dass** die Spannrahmen (3) zumindest im oberen Randbereich miteinander über mehrere spannrahmenfeste Querstreben (7) und diesen zugeordnete, beim Zusammenfahren der Spannrahmen ineinandergreifende und gegenseitig starr verbundene Kupplungsteile (10) zu einem in Querrichtung schubsteifen Rahmenverbund zusammengefügt sind, wobei die Spannrahmen (3) in der Arbeitsstellung über in Höhenrichtung der Spannrahmen versetzte Querstreben (7.3, 7.4) miteinander verbunden sind.

2. Bearbeitungsstation nach Anspruch 1, **dadurch gekennzeichnet, dass** der aus den Spannrahmen (3) und Querstreben (7) bestehende Rahmenverbund beim Zusammenschieben der Spannrahmen (3) selbsttätig zusammenfügbar ist.

3. Bearbeitungsstation nach Anspruch 1 oder 2, **dadurch gekennzeichnet, dass** zumindest einige der zueinander höhenversetzten Querstreben (7.3, 7.4) gegenseitig versteift sind.

4. Bearbeitungsstation nach einem der vorhergehenden Ansprüche, **dadurch gekennzeichnet, dass** die Querstreben (7) jeweils zweiteilig ausgebildet sind und jede Teilstrebe (9A, 9B) einerseits starr am Spannrahmen (3) befestigt und andrerseits am freien Ende mit einem Kupplungsteil (10) bestückt ist.

5. Bearbeitungsstation nach einem der vorhergehenden Ansprüche, **dadurch gekennzeichnet, dass** der durch die Spannrahmen (3) und Querstreben (7) gebildete Rahmenverbund statisch überbestimmt ist.

6. Bearbeitungsstation nach einem der vorhergehenden Ansprüche, **dadurch gekennzeichnet, dass** die Spannrahmen (3) und Querstreben (7) zum Ausgleich von Kupplungsspiel in der Arbeitsstellung unter Vorspannung zusammengefügt sind.

7. Bearbeitungsstation nach einem der vorhergehenden Ansprüche, **dadurch gekennzeichnet, dass** eine zusätzliche Einzelstrebe (7) eingefügt ist, deren Gesamtlänge geringfügig von der Gesamtlänge der übrigen Querstreben (7) abweicht.

8. Bearbeitungsstation nach einem der vorhergehenden Ansprüche, **dadurch gekennzeichnet, dass** die Spannrahmen (3) über spielarme Rollenkäfige (4) auf den Führungen (5) verfahrbar gelagert sind.

9. Bearbeitungsstation nach einem der vorhergehenden Ansprüche, **dadurch gekennzeichnet, dass** die Bearbeitungsstation (1) ein Bodenspannsystem (2) für eine Karosserie-Bodengruppe aufweist.

10. Bearbeitungsstation nach einem der vorhergehenden Ansprüche, **dadurch gekennzeichnet, dass** die Kupplungsteile (10) jeweils mit einem Zentrierkonus (12) versehen und in der Arbeitsstellung der Spannrahmen (3) mechanisch verriegelt sind.

11. Bearbeitungsstation nach einem der vorhergehenden Ansprüche, **dadurch gekennzeichnet, dass** in der eingerückten Kupplungslage die Kupplungsteile (10A, 10B) durch einen Arbeitskolben (13) über keilförmige Zwischenstücke 14, welche einen erweiterten Wulst 15 des Zentrierbolzens 12 hintergreifen, mechanisch verriegelbar sind.

12. Bearbeitungsstation nach einem der vorhergehenden Ansprüche, **dadurch gekennzeichnet, dass** die bodenseitigen Fixpunkte (6) als Aufnahmen mit Spannrahmen-Zentrier- und Verriegelungsfunktion ausgebildet sind.

13. Bearbeitungsstation nach einem der Ansprüche 6 bis 12, **dadurch gekennzeichnet, dass** eine oder mehrere Querstreben (7) sich innerhalb des Karosserieumrisses durch Aussparungen oder Durchbrüche in den Karosserieteilen erstrecken, um eine möglichst gleichmäßige, gegenseitige Spannrahmenaussteifung zu erzielen.

14. Bearbeitungsstation nach einem der vorhergehenden Ansprüche, **dadurch gekennzeichnet, dass** für unterschiedliche Karosserietypen mehrere aneinandergereihte Spannrahmen (3, 3', 3") vorgesehen sind, die in Förderrichtung (R) gemeinsam und wechselweise von einer Vorrats- in die Bereitschaftsstellung an der Bearbeitungsstation verschiebbar sind.

15. Verfahren zum Betrieb einer Bearbeitungs-, insbesondere Geometrieschweißstation für Kraftfahrzeug-Rohkarosserien, nach einem der Ansprüche 1 bis 14, **dadurch**
**gekennzeichnet, dass** nach Beendigung des Schweißprozesses der Rahmenverbund soweit geöffnet wird, dass die nachfolgenden Karosserieteile in die Bearbeitungsstation eingefahren werden können, woraufhin die Spannrahmen (3) erneut zugestellt und in der Arbeitsstellung verriegelt werden.

## Claims

1. Machining station, in particular a geometrical welding station for motor vehicle body shells, with clamping frames (3), which are arranged on both sides of the bodywork conveying system (1) and can be moved from a standby position into a working position fixed exactly with respect to the body shell, in order to position bodywork side parts transversely with respect to the conveying direction (R) of the conveying system (1), the truss-like stiffened clamping frames (3) being mounted in a linearly movable manner in the lower edge region on guides (5) running transversely with respect to the conveying direction (R) of the conveying system (1) and, in the working position, being positioned at stationary fixed points (6) on the floor and able to be connected to one another by means of a number of transverse struts (7), **characterized in that** the clamping frames (3) are joined together, at least in the upper edge region, by means of a number of transverse struts (7) fixed on the clamping frames and associated coupling parts (10), which engage in one another when the clamping frames are moved together and are connected rigidly to one another, to form a frame assembly which is resistant to shearing in the transverse direction, the clamping frames (3) being connected to one another in the working position by means of transverse struts (7.3, 7.4) that are offset in the direction of the height of the clamping frames.

2. Machining station according to Claim 1, **characterized in that** the frame assembly consisting of the clamping frames (3) and transverse struts (7) can be joined together automatically when the clamping frames (3) are pushed together.

3. Machining station according to Claim 1 or 2, **characterized in that** at least some of the transverse struts (7.3, 7.4) that are offset in height in relation to one another are stiffened with respect to one another.

4. Machining station according to one of the preceding claims, **characterized in that** the transverse struts (7) are respectively formed as divided in two and each part-strut (9A, 9B) is on one side rigidly fastened to the clamping frame (3) and on the other side is provided at the free end with a coupling part (10).

5. Machining station according to one of the preceding claims, **characterized in that** the frame assembly formed by the clamping frames (3) and transverse struts (7) is statically overdetermined.

6. Machining station according to one of the preceding claims, **characterized in that** the clamping frames (3) and transverse struts (7) are joined together under prestress to compensate for coupling play in the working position.

7. Machining station according to one of the preceding claims, **characterized in that** an additional single strut (7), the overall length of which deviates slightly from the overall length of the other transverse struts (7), is inserted.

8. Machining station according to one of the preceding claims, **characterized in that** the clamping frames (3) are mounted movably on the guides (5) by means of play-free roller cages (4).

9. Machining station according to one of the preceding claims, **characterized in that** the machining station (1) has a bottom clamping system (2) for a bottom bodywork assembly.

10. Machining station according to one of the preceding claims, **characterized in that** the coupling parts (10) are respectively provided with a centring cone (12) and are mechanically locked in the working position of the clamping frames (3).

11. Machining station according to one of the preceding claims, **characterized in that**, in the engaged coupling position, the coupling parts (10A, 10B) can be mechanically locked by a working piston (13) by means of wedge-shaped intermediate pieces 14, which engage behind a widened bead 15 of the centring pin 12.

12. Machining station according to one of the preceding claims, **characterized in that** the fixed points (6) on the floor are formed as receptacles with a clamping frame centring and locking function.

13. Machining station according to one of Claims 6 to 12, **characterized in that** one or more transverse struts (7) extend within the outline of the body through clearances or apertures in the bodywork parts, in order to achieve a mutual clamping frame stiffening that is as uniform as possible.

14. Machining station according to one of the preceding claims, **characterized in that** a number of clamping frames (3, 3', 3'') arranged in series are provided for different types of body, and can be displaced together in the conveying direction (R) and in alternation from a storing position into the standby position at the machining station.

15. Method for operating a machining station, in particular a geometrical welding station for motor vehicle body shells, according to one of Claims 1 to 14, **characterized in that**, after completion of the welding process, the frame assembly is opened to the extent that the subsequent bodywork parts can be introduced into the machining station, whereupon the clamping frames (3) are once again adjusted into place and are locked in the working position.

## Revendications

1. Poste d'usinage, en particulier de soudage géométrique pour carrosseries brutes de véhicules automobiles, comprenant des armatures de serrage (3) disposées de chaque côté du système de transport de carrosserie (1), qui peuvent être déplacées pour le positionnement de pièces latérales de la carrosserie transversalement à la direction de transport (R) du système de transport (1) depuis une position prête dans une position de travail fixée exactement par rapport à la carrosserie brute, les armatures de serrage (3) rigidifiées à la manière d'un châssis étant supportées de manière déplaçable linéairement dans la région de bord inférieure sur des guides (5) s'étendant transversalement à la direction de transport (R) du système de transport (1), et pouvant être connectées dans la position de travail à des points de fixation (6) stationnaires du côté du plancher, et les unes aux autres par le biais d'entretoises multiples (7), **caractérisé en ce que** les armatures de serrage (3), au moins dans la région supérieure, sont assemblées les unes aux autres par le biais d'entretoises multiples (7) fixées aux armatures de serrage et de pièces d'accouplement (10) associées à celles-ci, venant en prise les unes dans les autres lors du rapprochement des armatures de serrage et connectées rigidement mutuellement, pour former un assemblage d'armature rigide en poussée dans la direction transversale, les armatures de serrage (3) étant connectées les unes aux autres dans la position de travail par le biais d'entretoises (7.3, 7.4) décalées dans la direction de la hauteur des armatures de serrage.

2. Poste d'usinage selon la revendication 1, **caractérisé en ce que** l'assemblage d'armature constitué des armatures de serrage (3) et des entretoises (7) peut être assemblé automatiquement lors du rapprochement des armatures de serrage (3).

3. Poste d'usinage selon la revendication 1 ou 2, **caractérisé en ce qu'**au moins certaines des entretoises (7.3, 7.4) décalées en hauteur les unes par rapport aux autres sont rigidifiées mutuellement.

4. Poste d'usinage selon l'une quelconque des revendications précédentes, **caractérisé en ce que** les entretoises (7) sont réalisées à chaque fois en deux parties et chaque entretoise partielle (9A, 9B) est fixée d'une part rigidement à l'armature de serrage (3) et d'autre part est munie à son extrémité libre d'une pièce d'accouplement (10).

5. Poste d'usinage selon l'une quelconque des revendications précédentes, **caractérisé en ce que** l'assemblage d'armature formé par les armatures de serrage (3) et les entretoises (7) est surdéterminé statiquement.

6. Poste d'usinage selon l'une quelconque des revendications précédentes, **caractérisé en ce que** les armatures de serrage (3) et les entretoises (7) sont assemblées avec précontrainte pour compenser le jeu d'accouplement dans la position de travail.

7. Poste d'usinage selon l'une quelconque des revendications précédentes, **caractérisé en ce qu'**une entretoise individuelle supplémentaire (7) est insérée, sa longueur totale s'écartant légèrement de la longueur totale des autres entretoises (7).

8. Poste d'usinage selon l'une quelconque des revendications précédentes, **caractérisé en ce que** les armatures de serrage (3) sont montées de manière déplaçable sur les guides (5) par le biais de cages à rouleaux (4) à faible jeu.

9. Poste d'usinage selon l'une quelconque des revendications précédentes, **caractérisé en ce que** le poste d'usinage (1) présente un système de serrage au plancher (2) pour un module de plancher de carrosserie.

10. Poste d'usinage selon l'une quelconque des revendications précédentes, **caractérisé en ce que** les pièces d'accouplement (10) sont à chaque fois pourvues d'un cône de centrage (12) et sont verrouillées mécaniquement dans la position de travail des armatures de serrage (3).

11. Poste d'usinage selon l'une quelconque des revendications précédentes, **caractérisé en ce que** dans la position d'accouplement embrayée, les pièces d'accouplement (10A, 10B) peuvent être verrouillées mécaniquement par un piston de travail (13) par le biais de pièces intermédiaires (14) en forme de clavettes, qui viennent en prise par l'arrière avec un bourrelet élargi (15) du boulon de centrage (12).

12. Poste d'usinage selon l'une quelconque des revendications précédentes, **caractérisé en ce que** les points de fixation (6) du côté du plancher sont réalisés sous forme de logements avec une fonction de centrage et de verrouillage des armatures de serrage.

13. Poste d'usinage selon l'une quelconque des revendications 6 à 12, **caractérisé en ce qu'**une ou plusieurs entretoises (7) s'étendent à l'intérieur du pourtour de la carrosserie, à travers des évidements ou des orifices dans les pièces de carrosserie, afin d'obtenir une rigidification des armatures de serrage mutuelle aussi uniforme que possible.

14. Poste d'usinage selon l'une quelconque des revendications précédentes, **caractérisé en ce que** pour différents types de carrosserie, plusieurs armatures de serrage (3, 3', 3") alignées en rangée sont prévues, lesquelles peuvent être déplacées dans la direction de transport (R) en commun et en alternance depuis une position de stockage dans la position prête sur le poste d'usinage.

15. Procédé pour faire fonctionner un poste d'usinage, notamment un poste de soudage géométrique, pour des carrosseries de véhicules automobiles selon l'une quelconque des revendications 1 à 14, **caractérisé en ce qu'**après la fin du processus de soudage, l'assemblage d'armature est ouvert dans une mesure telle que les pièces de carrosserie suivantes puissent être introduites dans le poste d'usinage, puis les armatures de serrage (3) sont à nouveau avancées et verrouillées dans la position de travail.
